# EUROPEAN PATENT SPECIFICATION

(11) **EP 2 387 490 B1**
(45) Date of publication and mention of the grant of the patent: **02.09.2015**
(21) Application number: 10731921.2
(22) Date of filing: 12.01.2010
(51) Int. Cl.: B27N 3/00, B32B 33/00

(54) **LONG-FIBER THERMOSET COMPOSITE WITH LOW ORANGE PEEL, METHOD FOR PREPARING AND USE OF THIS COMPOSITE**
WÄRMEGEHÄRTETER LANGFASER-VERBUNDSTOFF MIT GERINGEM ORANGENHAUTEFFEKT, VERFAHREN ZUR HERSTELLUNG UND GEBRAUCH DIESER VERBUNDSTOFF
COMPOSITE THERMODURCI À LONGUES FIBRES ET AU REVÊTEMENT FAIBLEMENT RUGUEUX, PROCÉDÉ DE FABRICATION DE CELUI-CI ET SON UTILISATION

(30) Priority: 14.01.2009 US 205107 P
(43) Date of publication of application: 23.11.2011
(73) Proprietor: Bayer MaterialScience LLC, Pittsburgh, PA 15205-9741 (US)
(72) Inventor: YOUNES, Usama, E., McMurray PA 15317-6607 (US); PERRY, John, H., Scenery Hill PA 15360-1734 (US); ROSTHAUSER, James, W., Pittsburg PA 15205-1734 (US)
(74) Representative: BIP Patents
(86) International application number: PCT/US2010/000057
(87) International publication number: WO 2010/083024

(56) References cited:
- EP-A1- 0 889 077
- EP-A1- 1 783 150
- WO-A1-02/090080
- US-A1- 2006 137 798
- US-A1- 2008 075 942
- US-B2- 7 059 665

## Description

### FIELD OF THE INVENTION

The present disclosure relates to methods for reducing orange peel in reinforced thermoset composites. More specifically, the present disclosure relates to a composition and method of manufacture for reducing orange peel, and the in-mold production of Class A surfaces of reinforced thermoset composites using long fiber thermoset injection (LFI).

### DESCRIPTION OF THE BACKGROUND OF THE INVENTION

Reinforcement of thermosets, and particularly polyurethane, improves mechanical properties, reduces weight and lowers costs for many applications when compared to the use of other materials having similar properties. Applications may include, for example, structural vehicular parts, tonneau covers, watercraft hulls, and building envelope components, such as windows and doors.

Reinforced polymeric matrix parts are typically made via established "spray up fiberglass" or sheet molding compound (SMC) processing. Generally, SMC processing techniques involve the use of polyester resins, pigments, fillers, reinforcement fibers and additives that are mixed and, subsequently, poured onto plastic film. The reinforcing fibers, in varying amounts and lengths, are added to yield the mechanical properties required for the particular application. A disadvantage to the conventional processes is the need to perform extensive post-mold operations to yield a finished part having suitable gloss or smoothness. Furthermore, it may not be possible for such a part to be economically produced having a "Class A" surface finish. A reinforced composite having an as-cured "Class A" surface is herein defined as one having a surface which exhibits essentially no "print-through" effect of the reinforcement when that cured surface is removed from the mold. This "print-through effect" is normally prevalent when such a composite contains any reinforcements and especially when the reinforcements are fibers. When glass fibers are used as the reinforcement, the print-through effect is often referred to as "glass read-through".

Long fiber thermoset injection (LFI) composites have performance characteristics of continuous fiber reinforced composites with the advantages of improved production speed and manufacturing accuracy attributed to chopped-fiber fabrication. LFI is a technique currently used by Krauss-Maffei Kunststofftechnik GmbH, Munich, Germany (Krauss-Maffei). Kraus-Maffei markets and sells specialized equipment to perform the LFI technique.

Although LFI can be used to prepare Class A surface polyurethane composites, employing LFI for polyurethane reinforced composites presents various challenges. For example, the nature of the LFI process makes it difficult to produce Class A surfaces because the deposition of glass and polyurethane during the process typically entraps air bubbles into the part that may be on or near the surface. The LFI process also deposits glass fibers onto the surface resulting in glass read-through defects.

One method of addressing defects that result from air entrapment or glass read-through is to deposit a polyurethane barrier coat between the in-mold paint and the LFI composite. The use of a barrier coat between the in-mold paint and the LFI composite is disclosed in U.S. Patent Publication No. 2002/0195742. While the addition of the barrier coat eliminates surface defects and glass read-through, it introduces a separate problem, often exhibited as surface waviness. This surface defect is typically referred to as "orange peel" because the surface texture resembles the uneven surface of the skin of an orange. Orange peel is believed to result from thermal and mechanical deformation of the barrier layer that occurs from the heat of reaction of the reinforced polyurethane layer and from the differences in the coefficient of linear expansion between the reinforced polyurethane layer and the barrier layer.

Accordingly, there is a need for a barrier layer that does not significantly deform and remains substantially flat during curing of the reinforced polyurethane composite part.

EP 1783150 A1 discloses a composite article in accordance with the preamble of claim 1 having a smooth, bubble-free surface which comprises a barrier coat which is bonded to a fiber-reinforced polyurethane/urea. The barrier coat is the reaction product of an isocyanate component comprising an isocyanate-terminated prepolymer and an isocyanate-reactive component. The fiber-reinforced polyurethane/- urea is the reaction product of an isocyanate component, an isocyanate-reactive component and fibers.

### SUMMARY OF THE INVENTION

The present disclosure provides a reinforced polymer composite comprising a polyurethane barrier layer that comprises a barrier layer first surface; a barrier layer second surface; and a plurality of hard segment domains. The reinforced composite may further comprise a reinforced polyurethane layer covering at least a portion of the barrier layer first surface. In certain embodiments, the barrier layer second surface may exhibit a Class A quality; and the plurality of hard segment domains substantially suppress deformation of the polymeric barrier layer at a molding temperature of the reinforced polymer composite.

In some embodiments of the composite, the polymeric barrier layer may be a thermosetting aromatic polyurethane, and in other embodiments, the polymeric barrier layer is an aliphatic urethane.

The present disclosure also provides a reinforced polymeric composite comprising a barrier layer having a plurality of hard segments with a glass transition temperature of at least 100°C. In another non-limiting embodiment, the plurality of hard segments has a domain size ranging from 5 nm to 20 nm. In yet another non-limiting embodiment, the barrier layer has a Root Mean Square ("RMS") roughness of 1 or less. RMS is a statistical parameter determined by the Atomic Force Microscopy (AFM) software and is used as a measure of the extent of surface roughness of the samples. The RMS parameter measures deviation of the surface heights from a reference height, namely, the average height, as a function of the surface coordinates x and y.

According to one aspect of non-limiting embodiments disclosed herein, the reinforced polymeric layer of the composite comprises a plurality of fibers. In some embodiments, the plurality of fibers comprises one or more of a glass fiber, a carbon fiber, or an aramid fiber. In still another embodiment the plurality of fibers comprise glass fibers.

In another embodiment, the present disclosure provides a polymeric composite further comprising a paint layer covering at least a portion of the barrier layer second surface, and wherein the paint layer exhibits a Class A quality. In another non-limiting embodiment, the polyurethane composite further comprises a paint layer covering at least a portion of the barrier layer second surface, wherein the paint layer exhibits a Class A quality. In some embodiments, the paint layer is an in-mold paint layer. In other non-limiting embodiments the paint layer contains aliphatic polyurethanes.

In embodiments that are not meant to be limiting, the reinforced polymeric composite may be an article of manufacture selected from the group consisting of a vehicular panel, a water craft hull, a window, and a door.

The present disclosure also provides a method to prepare a reinforced polymer composite with a Class A surface to provide a mold surface. In certain embodiments, the mold surface may have a degree of finish suitable for the manufacture of a Class A quality cured polymer surface. In certain embodiments, the method comprises: applying a polyurethane barrier layer to at least a portion of the mold surface, where the polyurethane barrier layer includes a barrier layer first surface, a barrier layer second surface, and a plurality of hard segments; applying a reinforced polyurethane layer to cover at least a portion of the barrier layer first surface; molding the polyurethane barrier layer and the reinforced barrier layer at a polymer composite molding temperature, wherein the plurality of hard segments substantially suppress deformation of the polyurethane barrier layer at the polymeric composite molding temperature; and demolding the polyurethane barrier layer and the reinforced barrier layer, wherein the barrier layer second surface comprises the Class A quality cured polymer surface. In another embodiment, applying the polymeric barrier layer comprises applying a barrier layer, and the plurality of hard segments has a glass transition temperature of at least 100°C. In another embodiment, after demolding, the plurality of hard segments has a domain size from 5 nm to 20 nm. In still another embodiment, after demolding, the barrier layer has a root mean square roughness of 1 or less.

In certain embodiments, applying the reinforced polymer layer comprises applying a plurality of fibers. In other embodiments, applying the reinforced polymer layer comprises applying a plurality of fibers of one or more of a glass fiber, a carbon fiber, or an aramid fiber. In other embodiments, applying the reinforced polymer layer comprises applying a plurality of glass fibers.

In other embodiments provided by the present disclosure, and non-limiting method further includes applying an in-mold paint layer to at least a portion of the mold prior to applying a polymeric barrier layer, wherein applying the barrier layer comprises covering the in-mold paint layer, and where the in-mold paint layer exhibits the Class A quality after demolding.

A non-limiting method further includes applying an in-mold paint layer to at least a portion of the mold prior to applying a polyurethane barrier layer, wherein applying the barrier layer comprises covering the in-mold paint layer, and wherein the in-mold paint layer exhibits the Class A quality after demolding. A non-limiting embodiment comprises applying an in-mold paint layer consisting of an aliphatic polyurethane.

The present disclosure also provides using the reinforced polymer composite to prepare an article of manufacture that is selected from the group consisting of a vehicular panel, a water craft hull, a window, and a door.

In certain embodiments, the reinforced polymer composite article of manufacture may comprise a polyurethane barrier layer that comprises a barrier layer first surface; a barrier layer second surface; and a plurality of hard segments. In one embodiment, the plurality of hard segments has a glass transition temperature of at least 100°C; and the plurality of hard segments substantially suppress deformation of the polymeric barrier layer at a polymer composite molding temperature. In an embodiment, a reinforced polyurethane layer covers at least a portion of the barrier layer first surface, and the reinforced polyurethane layer comprises a plurality of glass fibers. In embodiments, the barrier layer second surface exhibits a Class A quality. In another embodiment, an article of manufacture comprises an in-mold paint layer that covers at least a portion of the barrier layer second surface, where the in-mold paint layer exhibits the Class A quality.

In some embodiments of an article of manufacture, the in-mold paint layer comprises an aliphatic polyurethane.

It should be understood that this invention is not limited to the embodiments disclosed in this Summary, and it is intended to cover modifications that are within the spirit and scope of the invention, as defined by the claims.

### BRIEF DESCRIPTION OF THE DRAWINGS

The features and advantages of apparatus and methods described herein may be better understood by reference to the accompanying drawings in which:
FIG. 1 is a schematic cross-section of a reinforced polymeric composite of a non-limiting embodiment disclosed herein;
FIG. 2 is schematic cross-section of a reinforced polymeric composite containing an in-mold coating of an embodiment disclosed herein;
FIG. 3 is a plot of moles of branch points per kilogram versus glass transition temperature for an embodiment of a polyurethane polymer used in a barrier coating disclosed herein;
FIG. 4 is an atomic force microscope micrograph of a barrier coating of an embodiment disclosed herein wherein the glass transition temperature of the hard segments is greater than 160°C;
FIG. 5 is an atomic force microscope micrograph of a comparative barrier coating wherein the glass transition temperature of the hard segments is less than 100°C;
FIG. 6 is an atomic force microscope micrograph of a barrier coating of an embodiment disclosed herein wherein the glass transition temperature of the hard segments is greater than 160°C showing sizes of the hard segment domain regions; and
FIG. 7 is an atomic force microscope micrograph of a comparative barrier coating wherein the glass transition temperature of the hard segments is less than 100°C showing sizes of the hard segment domain regions.

The reader will appreciate the foregoing details, as well as others, upon considering the following detailed description of certain embodiments according to the present disclosure.

### DETAILED DESCRIPTION OF THE PREFERRED EMBODIMENTS

In the present description of embodiments and in the claims, other than in the operating examples or where otherwise indicated, all numbers expressing quantities or characteristics are to be understood as being modified in all instances by the term "about". Accordingly, unless indicated to the contrary, any numerical parameters set forth in the following description and the attached claims are approximations that may vary depending on the desired properties and products one seeks to obtain. At the very least, and not as an attempt to limit the application of the doctrine of equivalents to the scope of the claims, each numerical parameter should at least be construed in light of the number of reported significant digits and by applying ordinary rounding techniques.

In accordance with embodiments of the present disclosure, developments in the area of "in-mold coating" of polyurethane parts have yielded fiber-reinforced composite parts exhibiting a Class A surface while preventing an orange-peel effect. This "in-mold coating technology" is, pursuant to certain embodiments discussed herein, beneficially combined with a LFI. LFI is a technique currently used by Krauss-Maffei Kunststofftechnik GmbH, Munich, Germany (Krauss-Maffei). Kraus-Maffei markets and sells specialized equipment to perform the LFI technique. Apparatus and processing parameters for such long fiber injection are disclosed, e.g., in U.S. Patent Publication 2004/0135280. The fiber-containing reaction mixture may be poured or otherwise placed in a mold. The contents of the mold may then be cured. The reinforced polyurethanes of embodiments disclosed herein may be fabricated using an open or closed mold.

It will be understood by those of ordinary skill in the art that polyurethane fiber reinforced components formed using methods that introduce fibers or other reinforcement materials into a polymer other than LFI are also within the scope of the present disclosure. For example, the polyurethane-forming reaction mixtures of the present invention may be processed by any of the known RIM and structural RIM methods using any of the fillers or fibers known to be useful in such processes.

In certain embodiments, the present disclosure provide a reinforced polymer composite and related methods wherein the final reinforced structure exhibits a Class A finish upon cure and removal from a mold. For some applications, such a surface requires a high degree of gloss and smoothness.

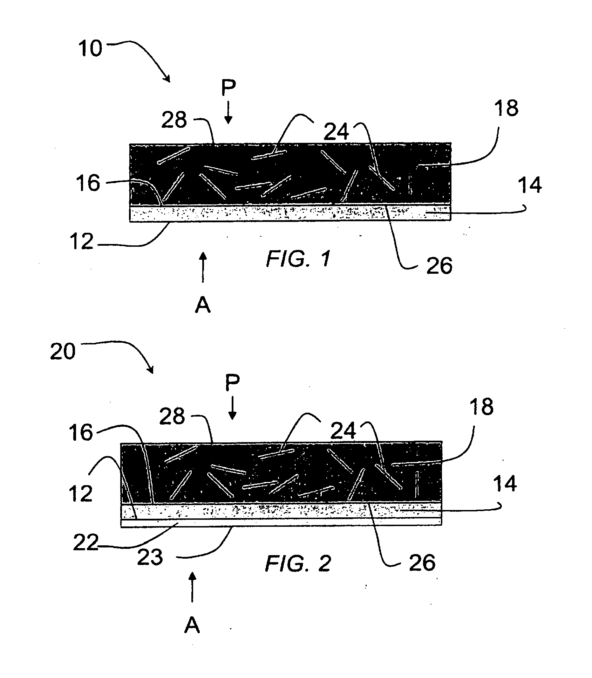

In accordance with an embodiment, and with reference to FIG. 1, a reinforced polymer composite 10 with a Class A surface 12 includes a polyurethane barrier layer 14. The polymeric barrier layer includes a plurality of hard segment domains or hard segments (not shown). The term "polymeric" is used herein to include homopolymers, copolymers, and terpolymers. In a non-limiting embodiment of a homopolymer barrier layer, the plurality of hard segment domains may include the entire polymeric material of the barrier layer. In non-limiting embodiments of copolymers and terpolymers, hereinafter, for simplicity, collectively referred to as copolymers, the plurality of hard segment domains include phase separated segments of the copolymer that are mechanically harder than soft segment domains, or soft segments, in the copolymer.

A non-limiting embodiment of a polyurethane barrier layer 14 includes phase separated copolymer with urethane hard segment domains and soft segment domains that may be composed of, for example, a polyether, a polyester, other polyol or combinations thereof. The soft segment domains of the polyurethane barrier layer may also include any other polymeric material known now or hereinafter to a person having ordinary skill in the art that is softer than the urethane hard segments. In a non-limiting embodiment, the urethane hard segment domains serve as crosslinks between the amorphous polyether or polyester soft segment domains. The phase separation may occur because the mainly non-polar, low melting soft segments are generally incompatible with the polar high melting hard segments. The soft segments, which may be formed from high molecular weight polyols, are mobile and may be present in a coiled formation, while the hard segments, which are formed from isocyanate and chain extenders, are stiff and immobile. In certain embodiments of the present disclosure, during curing of the reinforced polymer composite, also referred to for simplicity, and not meant to be limiting, as the "LFI composite", the hard segment domains of the barrier layer are sufficiently hard enough to resist deformation of the barrier layer that would result in an orange peel effect.

In a non-limiting embodiment of a reinforced polymer composite 10, the polymeric barrier layer 14 also includes a barrier layer first surface 16 and a barrier layer second surface 12, where the barrier layer second surface 12 exhibits Class A quality. A non-limiting aspect of embodiments of a reinforced polymer composite 10 disclosed herein includes a reinforced polyurethane layer 18. The reinforced polymer layer 18 covers at least a portion of the barrier layer first surface 16. The barrier layer 14 prevents print through of the reinforcing material 24 of the reinforced polymer layer18, and contains hard segments (not shown) with sufficient hardness to prevent mechanical deformation of the barrier layer 14 at the molding temperature of the reinforced polymer composite 10, which deformation otherwise would manifest as an orange peel effect on the barrier layer second surface 12.

Referring now to FIG. 2, a non-limiting embodiment of a reinforced polymer composite 20, a polymeric barrier layer 14 also includes a barrier layer first surface 16 and a barrier layer second surface 12, wherein the barrier layer second surface 12 may or may not exhibit Class A quality. A non-limiting aspect of embodiments of a reinforced polymer composite 20 disclosed herein includes a reinforced polymer layer 18. The reinforced polymer layer 18 covers at least a portion of the barrier layer first surface 16. The barrier layer 14 prevents print through of the reinforcing material 24 of reinforced polymer layer 18, and contains hard segment domains (not shown) with sufficient hardness to prevent mechanical deformation of the barrier layer 14 at the molding temperature of the reinforced polymer composite 10, which deformation otherwise would manifest as an orange peel effect on the barrier layer second surface 12. In an embodiment that is not meant to be limiting, a paint layer 22 may cover at least a portion of the barrier layer second surface 12. In a non-limiting embodiment, the paint layer 22 may be an in-mold coating.

The polymeric barrier layer, in a non-limiting embodiment, may be a thermosetting or a crosslinked polyurethane, whereas in other non-limiting embodiments, the polymeric barrier layer may be a thermoset polyurethane. The barrier layer may contain aliphatic polyurethanes, which are known to maintain an improved appearance after exposure to the elements relative to aromatic polyurethanes. For embodiments that employ a paint layer, the paint layer may consist of polyurethanes as described hereinabove for the barrier layer. In a non-limiting embodiment, the paint layer may be an aliphatic polyurethane that maintains its appearance after exposure to the elements.

In accordance with an embodiment of the present disclosure, a barrier layer 14 may be bonded to a reinforcement-containing layer 18 so that, after curing, the resultant Class A surface 12 may be formed and remains of Class A quality after curing of both layers. As illustrated, the surface 12, which is a part of the original barrier layer material 14, contains no reinforcement 24. It should be noted that although reinforcements 24 are illustrated and described to be fibers, other shaped reinforcements are deemed to be within the scope of embodiments of the present disclosure. Referring, again, to FIGS. 1 and 2, cross-sections of reinforced polymer composite structures 10, 20 are depicted after curing. As illustrated, when Class A surfaces 12, 23 of composites 10, 20 are viewed in the direction identified by axis "A", barrier layer 14 conceals from view fibers 24 imbedded in reinforced layer 18. Surfaces 12, 23 may be of high gloss and smoothness and may display a mirror like image from objects displaced from surfaces 12, 23 at some distance along axis A. In certain embodiments, a high gloss surface has the characteristic of being shiny or light reflective. When a smooth and regular surface displays a high gloss finish, and does not exhibit significant curvature that might affect the reflection viewed therein, it is possible that the scattering of incident light is minimal so that an observer can view light reflected by the high gloss surface as a distinct and usually recognizable image. In the absence of barrier layer 14, alternate surface 26 of structures 10, 20 would not exhibit Class A gloss or smoothness and would exhibit a "print-though" effect due to the presence of fibers 24. Although "Class A" is a generic term and may mean different levels of quality in the realm of different applications and requirements, alternate surface 26 would not, in general, qualify as Class A. This is because, upon curing, reinforced layer 18 will exhibit an orange peel effect, general surface roughening, and have light scattering centers (the fibers 24 and or other defects not shown) proximal to alternate surface 26.

For the polyurethane-based systems tested to date, it has been experimentally determined that, in certain embodiments, barrier layer 14 must have thickness *d* of at least 127 µm (0.005 inches) and should be at least 762 µm (0.030 inches) thick. Barrier layer 14 may be any suitable greater thickness, such as up to 6,35 mm (0.250 inches) thick; however, weight and cost considerations may discourage such a thickness. In certain embodiments, a minimum thickness, d, is typically required if barrier layer 14 contains pigment (exhibits color). This is because the effects of the fibers 24, even though not resulting in direct fiber visibility when an observer views surfaces 12, 23 will still cause surfaces 12, 23 to not appear glossy or lustrous and will disqualify surface 12, 23 from being Class A. It will be recognized that the materials and formulations used to make barrier layer 14 must be such that they will, upon curing of both barrier layer 14 and reinforced layer 18, form an acceptable bond between the layers that will resist delamination or other degradation during use within the intended service environment.

While the barrier layer 14 is effective in preventing glass read-through, if the barrier layer 14 is not mechanically hard, or softens during curing of the reinforced polymeric composite, a Class A surface will not be achieved because an orange peel effect will be observed. It is believed that this orange peel effect is observed when the glass transition temperature T_{g} or the melting temperature Tₘ of the barrier layer is too low to resist deformation from heat of the exotherm of the curing polymer reaction, the heat of the mold, and differences in the coefficient of linear expansion between the barrier layer 14 and the reinforced layer 18.

In a non-limiting embodiment, the polymeric barrier layer has hard segment domains wherein the T_{g} of the hard segment domains is greater than or equal to 100°C. In other non-limiting embodiments, the T_{g} of the hard segment domains is 125°C or greater. In still another embodiment, the T_{g} of the hard segment domains is at least 150°C. In some embodiments, the T_{g} of the hard segment domains is greater than 160°C. In still another non-limiting embodiment, the T_{g} of the hard segment domains is larger than the exotherm of the curing polymer in the reinforced layer 18.

In certain embodiments, the hard segment domain size may range from 5 nm to 20 nm, inclusive. In other embodiments the hard segment domain size may range from 2 nm to 30 nm, or from 10 nm to 25 nm. In yet other non-limiting embodiments barrier layers containing hard segment domains of sufficient strength have Root Mean Square (RMS) Values of 1 or less. For polyurethane barrier layers, the differences in the samples RMS values are attributed to the hard and soft segment morphologies of the polyurethanes.

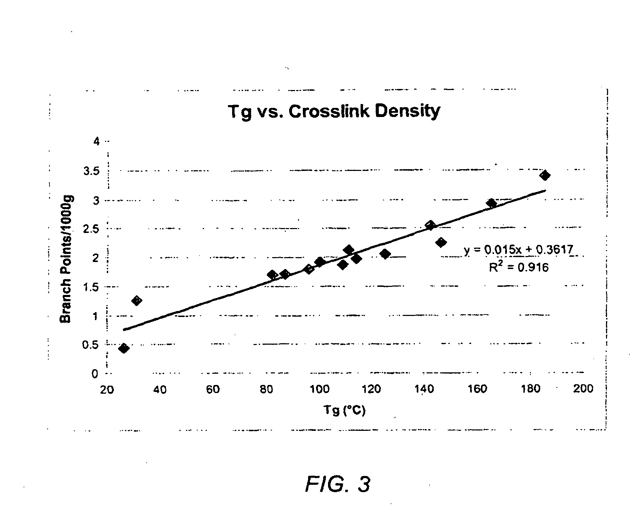

For the case of polyurethane barrier layers, the T_{g} of the hard segments can be manipulated by changing the crosslink density of the polymer. Methods of increasing the crosslink density are known to those having ordinary skill in the art, and need not be elaborated upon herein. The effect of increased crosslink density for a typical polyurethane on the T_{g} of the polyurethane is illustrated in FIG. 3.

One non-limiting method of increasing the T_{g} of the hard segment domains is to use different chain extenders in the polyurethane chemistry. For example, it was found that a polyurethane barrier layer that was extended using diethyltoluenediamine (DETDA) gave no hard segment T_{g} or Tₘ. However, a polyurethane barrier layer that was extended with isophorone diamine (IPDA) had a T_{g} of 152°C for the hard segment domains. Composite samples made from layers of in-mold paint, a polyurethane barrier coat extended with IPDA and LFI polyurethane exhibited low orange peel having a smoothness index value of 9, as measured using PCI Powder Coating Visual Smoothness Panels from The Powder Coatings Institute, The Woodlands, TX. In contrast, samples with DETDA extended barrier layers gave orange peel values (PCI smoothness panels) of 5 or less.

The polyurethane for both the reinforced layer and the barrier layer can be formed using standard precursors. For example, non-limiting precursors are disclosed in U.S. Patent Publication 2008/0020194. In certain embodiments, the formulations used form barrier layer 14 and the resulting surface 12 may be particularly suitable for indoor use. For example, in certain embodiments, direct sunlight, heat, acid rain, and other weather-related effects may play a major role in degrading the finish of surface 12 so formed.

A layered, fiber-reinforced composite 20 is shown in FIG. 2. Surface 23 becomes, upon cure and subsequent removal from mold, a Class A finish surface 23 requiring no further preparation. Composite 20 is shown to be made up of topcoat 22 (also referred to herein as paint layer), barrier layer 14, and reinforced layer 18. As in the previously described embodiment, it is recognized that the materials and formulations used to make barrier layer 14 must be such that they will, upon curing, form an acceptable bond with both topcoat 22 and reinforced layer 18 so that the layers of composite 20 will resist delamination or other degradation during use within the intended service environment. There is a minimum barrier layer thickness, d, to be determined by the materials used to form that barrier layer 14 and which may also depend on the type of reinforced layer 18 that is to be concealed when the cured composite 20 is removed from mold and viewed by an observer essentially along axis A.

In certain embodiments, topcoat 22 may be formulated from higher cost, aliphatic polyurethane. Aliphatic polyurethane is capable of maintaining its new appearance after exposure to the elements, when compared with aromatic polyurethane. In certain other embodiments, topcoat 22 may be formulated as two or more layers, with the second layer employed to provide color perceived by the end user. The multi-layer topcoat 22 may then be opaque. As a user may not want the color to fade, the top layer may be a clear or substantially translucent and act like a sunblocker to dramatically slow fading. Because the topcoat is opaque, the color of the barrier layer 14 is not of particular importance. What is important, however, is that the barrier layer 14 bond well to both the colored topcoat layer and the reinforced layer 18, and has a glass transition temperature of the hard segments of the barrier layer of at least about 100°C or higher. Topcoat 22 may be applied such that it is formed to a thickness of between 12.7 µm to 127 µm (0.0005 inches to 0.005 inches).

Topcoat 22 may be deposited, such as by spraying, onto a mold surface (not shown), thereby creating, after cure, Class A surface 23. The mold surface is previously prepared to exhibit minimal surface roughness. When polyurethane or other thermosetting materials are cured, the created part surface 23 will tend to match the smoothness and other characteristics of the mating mold surface. The mold surface may be polished or otherwise smoothed to facilitate creation of a particular type of Class A composite surface 23. Highly polished nickel or chrome mold surfaces are generally achieved by diamond polishing. Alternatively, the mold surface may be prepared to facilitate creation of another type of Class A composite surface 23 having a low-gloss or even a mildly textured surface. An example of the latter surface 23 is a subtle, leather-grain appearance that may be created by texturing the mold rather than by polishing it to a high luster. In the continuum of Class A surfaces so described, it is the reinforcement 24 "print-through" effect and the barrier layer 14 orange peel effect that are detrimental to the intended appearance. The mold surface may be cleaned after polishing or otherwise appropriately prepared to avoid the inclusion of debris or other material within topcoat 22. Cleaning is defined herein to include various known techniques to remove grinding/polishing/other material from mold surface. Cleaning also encompasses removal of other dirt, debris, mold release materials from mold surface and other parts of mold which are not to play a direct role, in creating a Class A composite surface 23 or, more generally, layered composite 20.

Before spraying or otherwise applying topcoat 22 to the mold surface, the mold should be heated. Although the fabrication methods disclosed herein should theoretically operate at room temperature, for certain embodiments employing polyurethane-based systems, the mold may be heated to a temperature ranging from about 37°C to 94°C. Processing temperatures of reactants and mold are chosen to provide a desired speed of composite processing. After application of topcoat 22, a formulation for the barrier layer 14 may be sprayed or otherwise deposited over topcoat 22. The barrier layer 14 may contain chain extenders and crosslinking agents that can increase the T_{g} of the hard segments of the barrier layer to a temperature of 100°C of higher. A suitable chain extender may be, for example, isophorone diamine. A person having ordinary skill in the art, without undue experimentation can readily determine polyurethane formulations, chain extenders, and crosslinkers for the polyurethane barrier layer that will increase the T_{g} of the hard segments of the barrier layer to 100°C or greater. Neither topcoat 22 nor barrier layer 14 contain reinforcement 24.

As described above, barrier layer 14 effectively hides imperfections, inclusions, and defects from the view of an observer looking essentially in direction A at as-cured Class A surface 23 (or 12). Also, barrier layer 14 may have a minimum thickness, *d*, to accomplish this objective, and may have a plurality of hard segments that can withstand deformation that may occur during curing of the composite 20. In one embodiment, the plurality of hard segments has a domain size ranging from 5 nm to 20 nm. In certain non-limiting embodiments, the T_{g} of the plurality of hard segments may be increased to improve the mechanical stability of the hard segments. Subsequent to placement of barrier layer 14 upon topcoat 22, reinforced layer 18 may be applied over barrier layer 22. Layer 18, if polyurethane-based, may be made up of foaming or non-foaming polyurethane. In addition, reinforcement layer 18 may include various reinforcement materials, such as fiberglass reinforcements 24.

The layered contents of composite 20 may be cured. Alternatively, a closure (not shown) may be positioned such that reinforced layer 18 in subject to the application of pressure, essentially along axis P (FIGS. 1 and 2), to assist in curing composite 20. Although composite 20 may be fabricated using an open or closed mold, the incorporation of additional structural elements or molded features (not shown) on or near a back surface 28 would best be accomplished using a mating closure (not shown). These features may include but are not limited to ribs, bosses, or other strengtheners. One of ordinary skill in the art will understand that the mold need not be filled before a mating closure is placed in the case of foaming polyurethane. In certain embodiments, it may be desirable for mating closure to be in place first with foaming to occur thereafter.

In general, a fast setting polyurethane barrier layer 14 may be useful in forming reinforced polyurethane composites 10, 20 exhibiting low-gloss, smooth or mildly textured surfaces where fiber print-through would be detrimental to the intended appearance. Additional benefits of using a fast setting polyurethane barrier layer 14 may include, for example, situations when the composite 10 is removed from the mold, and only subsequent washing and topcoating with a glossy paint is desired or necessary to obtain a glossy Class A surface. This situation is typically referred to in the industry as "paint ready", because the surface is uniform and smooth and ready to receive a subsequently applied coating upon cure. In contrast, with conventional methods of polymeric matrix reinforcement, the cycle time is too long or the surface requires extensive sanding, priming, or other repair to enable formation of a Class A finish by topcoating.

Accordingly, in certain embodiments of the present disclosure, methods employing the combination of spray "in-mold coating" techniques, which form polyurethane from diisocyanate and polyols, to create topcoat 22 and barrier layer 14 with LFI molding processes to create reinforced layer 18 can be used to successfully create Class A finish structures in an economic and reproducible fashion. In these embodiments, layers 22, 23, and 24 compatibly bond to one another upon cure and do not delaminate in service.

The highly reactive polyurethane forming materials used to create topcoat 22 and barrier layer 14 may gel in place quickly, typically within seconds, upon contacting the heated mold. As used herein, "gel" is a general term related to the extent of reaction of these forming materials and is used to describe a noticeable occurrence of a transformation of the forming materials from a flowing, liquid-like state to a viscous, elastic-like state. It will be understood by those of ordinary skill in the art that gel of a first layer is requisite prior to applying subsequent layers. When such a fabrication approach is followed, subsequent application of reinforced layer 18 will not disturb previously formed layers to an extent that would be a detriment to forming as-cured Class A surface 23 of the composite 20.

The material used to create topcoat 22 may be a solvent based, two-component precursor of aliphatic polyurethane. The topcoat material 22 may contain between about 30 and about 60 volume fraction of solids. This material has a so-called "working time" once the two components are mixed of between approximately 20 and approximately 150 minutes. The solvents typically evaporate rapidly when the topcoat forming mixture is spray applied to the heated mold. The remaining reactants then gel "in place" in the mold 20 very quickly, typically within seconds. Gelling typically occurs within about 30 to about 300 seconds.

In a non-limiting embodiment, barrier coat is a polyurethane composition which is the reaction product of (1) a polyisocyanate component that can include an isocyanate-terminated prepolymer having an NCO content of from about 10 to about 32% by weight, in certain embodiments, from about 15 to about 32% by weight, and in other embodiments from about 20 to about 32% by weight and (2) an isocyanate-reactive component which may include at least one amine-initiated polyether polyol having a functionality greater than 2, in certain embodiments, from about 3 to about 6, and in other embodiments, from about 3 to about 4, and an OH number of from about 60 to about 700, in certain embodiments, from about 130 to about 700, and in other embodiments, from about 140 to about 650. The barrier coat may be applied to a surface such as a mold surface, in an amount such that the cured barrier coat will have a thickness of, for example, at least 127 µm (5 mils), in certain embodiments, from about 203 to about 508 µm (8 to about 20 mils), and in other embodiments, from about 203 to about 305 µm (8 to about 12 mils). The barrier coat polyurethane/polyurea-forming system may be formulated to cure within a short amount of time, for example, in less than 30 seconds, and in certain embodiments less than 10 seconds so that it will be substantially cured before application of the second, reinforced polyurethane/polyurea composition. The barrier coat must have a T_{g} of the hard segments which is greater than the exotherm of the curing polymer in the reinforced layer 18, and in non-limiting embodiments should be 100°C or greater.

As used herein, the term "cured" as used herein shall mean that any linear and/or branched components of the composition are at least partially reacted into the polymer network. Crosslink density herein is defined as moles of branch points contained in 1000 grams of cured polymer. The number of moles of branch points per kilogram, i.e., the degree of crosslinking, ranges from about 1.75 to about 3.25. In more preferred embodiments, the number of moles of branch points per kilogram, i.e., the degree of crosslinking, ranges from about 2.0 to about 3.0. In the most preferred embodiments, the number of moles of branch points per kilogram, i.e., the degree of crosslinking, ranges from about 2.25 to about 2.75. One of ordinary skill in the art will understand that the presence and degree of crosslinking, i.e., the crosslink density, can be determined by a variety of methods, such as dynamic mechanical thermal analysis (DMTA) using a TA Instruments DMA 2980 DMTA analyzer conducted under nitrogen. This method determines the glass transition temperature and crosslink density of free films of coatings or polymers. These physical properties of a cured material are related to the structure of the crosslinked network.

The isocyanate-terminated prepolymer required for the barrier coat composition may be produced from any of the known polyisocyanates having at least two isocyanate groups. Such isocyanates include aromatic, aliphatic, and cycloaliphatic polyisocyanates and combinations thereof. Useful isocyanates include: diisocyanates such as m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,3-cyclohexane diisocyanate, 1,4-cyclohexane diisocyanate, hexahydrotoluene diisocyanate and its isomers, isophorone diisocyanate, dicyclohexylmethane diisocyanates, 1,5-naphthalene diisocyanate, 1-methylphenyl-2,4-phenyl diisocyanate, 4,4'-diphenylmethane diisocyanate, 2,4'-diphenylmethane diisocyanate, 4,4'-biphenylene diisocyanate, 3,3'-dimethoxy-4,4'-biphenylene diisocyanate and 3,3'-dimethyl-4,4'-biphenylene diisocyanate; triisocyanates such as 2,4,6-toluene triisocyanate; and polyisocyanates such as 4,4'-dimethyl-diphenylmethane-2,2',5,5'-tetraisocyanate and the polymethylene polyphenylpolyisocyanates.

Such suitable isocyanates also include:
1) Isocyanurate group-containing polyisocyanates which may be prepared as set forth in DE-PS 2,616,416, EP 3,765, EP 10,589, EP 47,452, US 4,288,586 and US 4,324,879. The isocyanato-isocyanurates generally have an average NCO functionality of 3 to 4.5 and an NCO content of 5 to 30%, preferably 10 to 25% and most preferably 15 to 25% by weight.
2) Uretdione diisocyanates which may be prepared by oligomerizing a portion of the isocyanate groups of a diisocyanate in the presence of a suitable catalyst, e.g., a trialkyl phosphine catalyst, and which may be used in admixture with other aliphatic and/or cycloaliphatic polyisocyanates, particularly the isocyanurate group-containing polyisocyanates set forth under (1) above.
3) Biuret group-containing polyisocyanates which may be prepared according to the processes disclosed in U.S. Patent Nos. 3,124,605; 3,358,010; 3,644,490; 3,862,973; 3,906,126; 3,903,127; 4,051,165; 4,147,714; or 4,220,749 by using co-reactants such as water, tertiary alcohols, primary and secondary monoamines, and primary and/or secondary diamines. These polyisocyanates preferably have an NCO content of 18 to 22% by weight.
4) Iminooxadiazine dione and optionally isocyanurate group-containing polyisocyanates which may be prepared in the presence of special fluorine-containing catalysts as described in DE-A 19611849. These polyisocyanates generally have an average NCO functionality of 3 to 3.5 and an NCO content of 5 to 30%, preferably 10 to 25% and most preferably 15 to 25% by weight.
5) Carbodiimide group-containing polyisocyanates which may be prepared by oligomerizing di- or polyisocyanates in the presence of known carbodiimidization catalysts as described in DE 1,092,007, US 3,152,162 and DE 2,504,400, 2,537,685 and 2,552,350.
6) Polyisocyanates containing oxadiazinetrione groups and containing the reaction product of two moles of a diisocyanate and one mole of carbon dioxide.

Undistilled or crude polyisocyanate may also be used. The crude toluene diisocyanate obtained by phosgenating a mixture of toluene diamines and the diphenylmethane diisocyanate obtained by phosgenating crude diphenylmethanediamine (polymeric MDI) are examples of suitable crude polyisocyanates. Suitable undistilled or crude polyisocyanates are disclosed in U.S. Patent No. 3,215,652.

In certain embodiments, the polyisocyanate can be an aromatic polyisocyanate which is commercially available such as any of those polyisocyanates available from Bayer MaterialScience under the names Mondur^{®} M, Mondur^{®} ML, Mondur^{®} MR, Mondur^{®} MRS, Mondur^{®} MA2903, Mondur^{®} PF, Mondur^{®} MRS2 and combinations thereof.

In certain embodiments, the polyisocyanate can be an aliphatic polyisocyanate which is commercially available such as any of those polyisocyanates available from Bayer MaterialScience under the names of Desmodur^{®} N, Desmodur^{®} N-100, Desmodur^{®} XP-2410, Desmodur^{®} XP-2580, Desmodur^{®} N-3200, Desmodur^{®} N-3300, Desmodur^{®} N-3390A, Desmodur^{®} N-3400, Desmodur^{®} N-3600, Desmodur^{®} N-3800 and combinations thereof.

In certain embodiments, polyisocyanates for the production of the prepolymer used to produce the barrier coat of the present disclosure may be prepolymers of diphenylmethane diisocyanate and methylene-bridged polyphenyl polyisocyanates.

Prepolymers based on polyether polyols or polyester polyols and diphenylmethane diisocyanate may be employed. Processes for the production of prepolymers from the above-described diisocyanates and polyisocyanates are known in the art.

The polyisocyanate component which includes the required prepolymer may then be reacted with an isocyanate-reactive component that includes at least one amine-initiated polyether polyol having a functionality greater than 2 and a number average molecular weight of from about 60 to 1100, and in certain embodiments from about 150 to about 700. The amine initiator used to produce this polyether polyol may be selected from any of the amines known to be useful for this purpose, for example, from toluene diamine, ethanol amine, ethylene diamine, and triethylene amine. This amine initiator is alkoxylated, generally with ethylene oxide and/or propylene oxide, although any of the known alkoxylating materials may be used, in accordance with techniques known to those skilled in the art.

In addition to the amine-initiated polyether polyol, the isocyanate-reactive component may also include any compound containing hydroxyl, amino, and/or thiol groups having a functionality of at least 2 and an OH Number of from about 60 to about 1100. Examples of suitable isocyanate-reactive materials include: polyether polyamines, polyether polyols initiated with a material other than an amine, polyester polyols, polyether-ester polyols, polymer polyols, polythioether polyols, polyesteramides, hydroxyl group-containing polyacetals, and hydroxyl-group-containing polycarbonates, and combinations thereof. Polyether polyols prepared from hydroxyl-group containing initiators are particularly useful.

The isocyanate-reactive component used to produce the barrier coat may also contain any of the known chain extenders, crosslinking agents, catalysts, release agents, pigments, surface-active compounds and/or stabilizers and any other auxiliary agents or processing aids commonly used in such systems.

Non-limiting examples of suitable chain extenders include: isophorone diamines, m-xylylene diamines, 1,4-butane diol, propylene glycol, ethylene glycol, dipropylene glycol, 1,6-hexanediol, and hydroquinone dihydroxy ethyl ether, for example, ethylene glycol. Suitable crosslinking agents include glycerin and diethyltoluenediamine. Suitable catalysts include: dibutyltindilaurate, tin octoate, tetramethylbutane-diamine, and 1,4-diaza-(2,2,2)-bicyclooctane. Suitable release agents include fatty acid esters and silicones. Examples of suitable pigments include: carbon black, titanium dioxide and organic pigments. Examples of suitable surface-active compounds and/or stabilizers include hindered amines and vitamin E.

In certain embodiments of the present disclosure, the isocyanate-reactive component used to produce the barrier coat includes: (1) from about 8 to about 18 wt % (based on total weight of isocyanate-reactive component) of an amine-initiated polyether polyol having a functionality of approximately 4 and a hydroxyl number of from about 500 to about 700; (2) from about 12 to about 32 wt % (based on total weight of isocyanate-reactive component) of an amine-initiated polyether polyol having a functionality of approximately 3 and a hydroxyl number of from about 100 to about 200; (3) from about 34 to about 54 wt % (based on total weight of isocyanate-reactive component) of a polymer polyol; (4) from about 13 to about 23 wt % (based on total weight of isocyanate-reactive component) of a chain extender; and optionally, (5) a catalyst. In certain embodiments, the components provide the barrier coat with hard segment domains that have a T_{g} of at least 100°C, or at least greater than the exotherm of the curing reinforced polymeric layer.

The barrier composition may be formed by reacting the isocyanate-terminated prepolymer with the isocyanate-reactive component in which the amine-initiated polyether polyol is present at an NCO/OH equivalent ratio of from about 0.8 to about 1.4, in certain embodiments from about 0.9 to about 1.2, and in other embodiments from about 1.0 to about 1.1.

The barrier coat of the present disclosure can have a durometer hardness value of from about 60 Shore A to about 95 Shore D, and in certain embodiments from about 50 Shore D to about 75 Shore D as determined according to ASTM D2240-00 testing standard.

In an embodiment, the barrier coat-forming reaction mixture may be applied to a surface in an amount sufficient to form a barrier coat having a thickness of at least 127 µm (5 mils), and in certain embodiments from about about 203 µm to about 305 µm (about 8 to about 12 mils) when fully reacted and cured. Application of the barrier coat may be carried out by any of the known methods which will produce a substantially defect-free surface. Examples of suitable methods include pouring and spraying.

The fiber-reinforced polyurethane/polyurea required layer of the composites of embodiments disclosed herein may be produced from: (1) a polyisocyanate component which includes at least one polyisocyanate having an NCO content of from about 6 to about 49%, in certain embodiments from about 20 to about 40%, in other embodiments from about 23 to about 34%, and still other embodiments from about 28 to about 32%; (2) an isocyanate-reactive component which comprises: (i) at least one polyether polyol initiated with a hydroxyl-group containing starter and having a functionality of 2 or greater, in certain embodiments from about 2 to about 6, in other embodiments from about 2 to about 4, and in still other embodiments from about 2 to about 3 and a hydroxyl number of from about 28 to about 1100, in certain embodiments from about 400 to about 1100, and in other embodiments from about 260 to about 1050, and/or (ii) at least one amine-initiated polyether polyol having a functionality greater than 2, in certain embodiments from about 2 to about 8, in other embodiments from about 3 to about 6, in still other embodiments from about 3 to about 4, and a hydroxyl number of from about 50 to about 1100, in certain embodiments from about 300 to about 900, in other embodiments from about 400 to about 700; and (3) a filler such as, for example, a long glass fiber.

Any of the known polyisocyanates or modified polyisocyanates having the required NCO content may be used in the polyisocyanate component used to produce the fiber reinforced layer of the composites of the present disclosure. Suitable isocyanates include the known organic isocyanates, modified isocyanates or isocyanate-terminated prepolymers made from any of the known organic isocyanates. Such isocyanates include aromatic, aliphatic, and cycloaliphatic polyisocyanates and combinations thereof. Useful isocyanates include: diisocyanates such as m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,3-cyclohexane diisocyanate, 1,4-cyclohexane diisocyanate, hexahydrotoluene diisocyanate and its isomers, isophorone diisocyanate, dicyclohexylmethane diisocyanates, 1,5-naphthalene diisocyanate, 1-methylphenyl-2,4-phenyl diisocyanate, 4,4'-diphenylmethane diisocyanate, 2,4'-diphenylmethane diisocyanate, 4,4'-biphenylene diisocyanate, 3,3'-dimethoxy-4,4'-biphenylene diisocyanate and 3,3'-dimethyl-4,4'-biphenylene diisocyanate; triisocyanates such as 2,4,6-toluene triisocyanate; and polyisocyanates such as 4,4'-dimethyl-diphenylmethane-2,2',5,5'-tetraisocyanate and the polymethylene polyphenylpolyisocyanates.

Undistilled or crude polyisocyanate may also be used. The crude toluene diisocyanate obtained by phosgenating a mixture of toluene diamines and the diphenylmethane diisocyanate obtained by phosgenating crude diphenylmethanediamine (polymeric MDI) are examples of suitable crude polyisocyanates. Suitable undistilled or crude polyisocyanates are disclosed in U.S. Patent No. 3,215,652.

Modified isocyanates are obtained by chemical reaction of diisocyanates and/or polyisocyanates. Modified isocyanates useful in the practice of the present disclosure include isocyanates containing ester groups, urea groups, biuret groups, allophanate groups, carbodiimide groups, isocyanurate groups, uretdione groups and/or urethane groups. In certain embodiments, examples of modified isocyanates include prepolymers containing NCO groups and having an NCO content of from about 6 to about 49% by weight, in certain embodiments from about 12 to about 32%, and in other embodiments from about 18 to about 30% by weight. Prepolymers based on polyether polyols or polyester polyols and diphenylmethane diisocyanate are particularly useful. Processes for the production of these prepolymers are known in the art.

In certain embodiments, polyisocyanates suitable for the production of rigid polyurethanes are methylene-bridged polyphenyl polyisocyanates and prepolymers of methylene-bridged polyphenyl polyisocyanates having an average functionality of from about 2 to about 3.5, and in other embodiments from about 2.2 to about 2.9, isocyanate moieties per molecule and an NCO content of from about 23 to about 32% by weight, and in certain embodiments from about 28 to about 32%.

The isocyanate-reactive component used to produce the fiber reinforced polyurethane/polyurea layer must include: (i) at least one alkylene oxide polyether polyol prepared from an initiator which is not an amine (e.g., any of the known hydroxyl group-containing starters) having a hydroxyl functionality greater than 2, in certain embodiments from about 2 to about 6, and in other embodiments from about 3 to about 4, and a hydroxyl number of at least 28, in certain embodiments from about 28 to about 1100, and on other embodiments from about 260 to about 1050 and/or (ii) at least one amine-initiated polyether polyol having a functionality greater than 2, in certain embodiments from about 2 to about 6, and in other embodiments from about 2 to about 4, and a hydroxyl number greater than 50, in certain embodiments from about 50 to about 1100, and in other embodiments from about 400 to about 700. The amine initiator used to produce such polyether polyols may be any of the known aliphatic or aromatic amines having an amino functionality of at least 2. In certain embodiments the amine initiators include: toluene diamine, ethanol amine, ethylene diamine and triethylene amine. Such alkylene oxide-. based polyether polyols and amine-initiated polyether polyols are commercially available and methods for producing them are known to those skilled in the art.

Examples of suitable alkylene oxide-based polyether polyols which are commercially available include those which are available from Bayer MaterialScience under the names Multranol^{®} 9158, Multranol^{®} 9139, Arcol^{®} PPG425, Arcol^{®} LG650 and Multranol^{®} 9171.

Examples of suitable amine-initiated polyether polyols which are commercially available include those which are available from Bayer MaterialScience under the names Multranol^{®} 4050, Multranol^{®} 9138, Multranol^{®} 9170, and Multranol^{®} 9181.

In addition to the required polyol(s), any of the other known polyols may also be included. Suitable organic materials containing two or more hydroxyl groups and having molecular weights of from about 400 to about 6000 include polyols such as polyester polyols, polyether polyols, polyhydroxy polycarbonates, polyhydroxy polyacetals, polyhydroxy polyacrylates, polyhydroxy polyester amides and polyhydroxy polythioethers. In certain embodiments, polyester polyols, polyether polyols and polyhydroxy polycarbonates may be employed.

Suitable polyester polyols include the reaction products of polyhydric alcohols (such as dihydric alcohols to which trihydric alcohols may be added) and polybasic (such as dibasic) carboxylic acids. In addition to these polycarboxylic acids, corresponding carboxylic acid anhydrides or polycarboxylic acid esters of lower alcohols or mixtures thereof may also be used to prepare the polyester polyols useful in the practice of the present disclosure. The polycarboxylic acids may be aliphatic, cycloaliphatic, aromatic and/or heterocyclic and they may be substituted, e.g. by halogen atoms, and/or unsaturated. Examples of suitable polycarboxylic acids include: succinic acid; adipic acid; suberic acid; azelaic acid; sebacic acid; phthalic acid; isophthalic acid; trimellitic acid; phthalic acid anhydride; tetrahydrophthalic acid anhydride; hexahydrophthalic acid anhydride; tetrachlorophthalic acid anhydride, endomethylene tetrahydrophthalic acid anhydride; glutaric acid anhydride; maleic acid; maleic acid anhydride; fumaric acid; dimeric and trimeric fatty acids such as oleic acid, which may be mixed with monomeric fatty acids; dimethyl terephthalates and bis-glycol terephthalate. Suitable polyhydric alcohols include: ethylene glycol; 1,2- and 1,3-propylene glycol; 1,3- and 1,4-butylene glycol; 1,6-hexanediol; 1,8-octanediol; neopentyl glycol; cyclohexanedimethanol; (1,4-bis(hydroxymethyl)cyclohexane); 2-methyl-1,3-propanediol; 2,2,4-trimethyl-1,3-pentanediol; triethylene glycol; tetraethylene glycol; polyethylene glycol; dipropylene glycol; polypropylene glycol; dibutylene glycol and polybutylene glycol, glycerine and trimethylolpropane. The polyesters may also contain a portion of carboxyl end groups. Polyesters of lactones, e.g., caprolactone or hydroxyl carboxylic acids such as .omega.-hydroxycaproic acid, may also be used.

Suitable polycarbonates containing hydroxyl groups include those obtained by reacting diols with phosgene, a diarlycarbonate (e.g., diphenyl carbonate) or cyclic carbonates (e.g., ethylene or propylene carbonate). Examples of suitable diols include: 1,3-propanediol; 1,4-butanediol; 1,6-hexanediol; diethylene glycol; triethylene glycol; and tetraethylene glycol. Polyester carbonates obtained by reacting polyesters or polylactones (such as those described above) with phosgene, diaryl carbonates or cyclic carbonates may also be used in the practice of the present disclosure.

Polyether polyols which are suitable include those obtained in known manner by reacting one or more starting compounds which contain reactive hydrogen atoms with alkylene oxides such as ethylene oxide, propylene oxide, butylene oxide, styrene oxide, tetrahydrofuran, epichlorohydrin or mixtures of these alkylene oxides. Polyethers which do not contain more than about 10% by weight of ethylene oxide units may be employed. Polyethers obtained without the addition of ethylene oxide may be employed. Suitable starting compounds containing reactive hydrogen atoms include polyhydric alcohols (described above as being suitable for preparing polyester polyols); water; methanol; ethanol; 1,2,6-hexane triol; 1,2,4-butane triol; trimethylol ethane; pentaerythritol; mannitol; sorbitol; methyl glycoside; sucrose; phenol; isononyl phenol; resorcinol; hydroquinone; and 1,1,1- or 1,1,2-tris-(hydroxyl phenyl)-ethane.

Polyethers modified by vinyl polymers are also suitable for the present disclosure. Such modified polyethers may be obtained, for example, by polymerizing styrene and acrylonitrile in the presence of a polyether (U.S. Pat. Nos. 3,383,351; 3,304,273; 3,523,095; 3,110,695 and German Patent No.1,152, 536).

The polythioethers useful in the present disclosure include the condensation products obtained from thiodiglycol on its own and/or with other glycols, dicarboxylic acids, formaldehyde, aminocarboxylic acids or amino alcohols. These condensation products may be polythio-mixed ethers, polythioether esters or polythioether ester amides, depending on the co-components.

Amine-terminated polyether useful in the present disclosure may be prepared by reacting a primary amine with a polyether containing terminal leaving groups such as halides, or mesylates as disclosed in U.S. Patent Nos. 5,693,864; 3,666,726; 3,691,112; and 5,066,824.

Suitable polyacetals include those prepared from aldehydes (e.g., formaldehyde) and glycols such as diethylene glycol, triethylene glycol, ethoxylated 4,4'-dihydroxydiphenyldimethylmethane, and 1,6-hexanediol. Polyacetals prepared by the polymerization of cyclic acetals may also be used in the practice of the present disclosure.

Polyhydroxy polyester amides and polyamines useful in the present disclosure include the predominantly linear condensates obtained from polybasic saturated and unsaturated carboxylic acids or their anhydrides and polyvalent saturated or unsaturated aminoalcohols, diamines, polyamines and mixtures thereof.

Suitable monomers for producing hydroxy-functional polyacrylates include acrylic acid, methacrylic acid, crotonic acid, maleic anhydride, 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, glycidyl acrylate, glycidyl methacrylate, 2-isocyanatoethyl acrylate and 2-isocyanatoethyl methacrylate.

The low molecular weight, isocyanate-reactive compounds useful in the present disclosure have from about 2 to about 6 hydroxyl groups, preferably two hydroxyl groups, and have an average molecular weight of from about 60 to about 200, in certain embodiments from about 80 to about 150 and may be used in combination with or instead of the high molecular weight material containing two or more hydroxyl groups. Useful low molecular weight isocyanate-reactive materials include the polyhydric alcohols which have previously been described in the process for the preparation of the polyester polyols and polyether polyols. Dihydric alcohols may be employed.

In addition to the above-mentioned isocyanate-reactive compounds, monofunctional and even small amounts of trifunctional and higher functional compounds generally known in polyurethane chemistry may be used. For example, trimethylolpropane may be used in certain embodiments where slight branching is desired.

Catalysts may be used to aid the polyurethane/polyurea-forming reaction. Examples of catalysts useful for promoting such reactions include di-n-butyl tin dichloride, di-n-butyl tin diacetate, di-n-butyl tin dilaurate, triethylenediamine, bismuth nitrate, tin octoate and tetramethyl butanediamine.

In addition to the isocyanate-reactive materials, a reinforcing material may also be included in the isocyanate-reactive component. The reinforcing material may be in the form of fibers. Suitable fibers have an average length of from about 10 to about 100 mm, and in certain embodiments from about 12.5 to about 100 mm. Suitable fibrous materials include: glass fibers; carbon fibers; ceramic fibers; natural fibers such as flax, jute, and sisal; synthetic fibers such as polyamide fibers, polyester fibers and polyurethane fibers. The fibrous material may be included in an amount of from about 10 to about 60 wt %, based on total weight of isocyanate-reactive component, in certain embodiments from about 20 to about 50 wt. %, and in other embodiments from about 15 to about 50 wt. %.

The composite articles of the present disclosure may have a solid or a foamed fiber-reinforced layer. A foamed layer may be obtained by including a blowing agent in the reaction mixture from which the fiber-reinforced layer is produced.

In certain embodiments of the present disclosure, the isocyanate component of the second, reinforced layer may be any commercially available polymeric MDI having the required NCO content, such as those available from Bayer MaterialScience under the names Mondur^{®} MRS, Mondur^{®} MR or Mondur^{®} MRS4. The isocyanate-reactive component may comprise: (1) a polyether polyol which is the propoxylation product of glycerin having a functionality of approximately 3 and an OH number of from 28 to 1100; and (2) an amine-initiated polyether polyol in which the amine initiator is an aromatic amine having a functionality of from 2 to 64 and an OH Number of from 50 to 1100. From about 25 to about 40 wt %, based on total weight of reaction mixture, of glass fibers having an average length of from about 12.5 to 100 mm may be included in the isocyanate-reactive component or may be added to the total reaction mixture either as the isocyanate and isocyanate reactive components are combined or after they have been combined. In certain embodiments the fiber may be combined with the reaction mixture as the isocyanate and isocyanate-reactive components.

The reinforced layer of the composites of the present disclosure may be produced with a reaction mixture in which the NCO to OH equivalent ratio is from about 0.95 to about 1.3, and in certain embodiments from about 1.0 to about 1.1.

While the composites of the present disclosure may be produced in accordance with any of the known techniques, in certain embodiments they are produced by an open-pour molding technique in which the barrier coat is applied by spraying and the reaction mixture that will form the second, reinforced layer is poured onto the barrier coat, such as after that barrier coat is substantially fully reacted.

As discussed herein, a topcoat or paint, such as an in-mold paint, may be added to the mold, and that the mold is preprocessed to have a clean and smooth surface capable of producing a Class A surface. The barrier coat may be configured such that upon curing the optional topcoat, the barrier coat, and the fiber-reinforced layer bond together in a manner and to an extent such that the barrier coat and the fiber reinforced layer form an acceptable bond between the layers that will resist delamination or other degradation during use within the intended service environment. In a non-limiting embodiment, the barrier coat contains hard segments or hard domain segments, which have a T_{g} of at least 100°C. In another non-limiting embodiment, the barrier coat contains hard segments that have a T_{g} that is higher than the exotherm of the curing or polymerization reaction of the reinforced polymer layer. Before spraying or otherwise applying the barrier coat-forming reaction mixture to a surface such as a mold surface, the mold may be heated, such as to a temperature ranging from about 37°C to 94°C. However, such heating is not required. Processing temperatures of reactants, reaction mixtures and mold may be chosen in accordance with techniques known to those skilled in the art to provide the desired speed of composite processing.

After application of the barrier coat to the surface or to the topcoat, the fiber-containing reaction mixture may be poured or otherwise deposited over the barrier coat. LFI is one suitable method. Apparatus and processing parameters for such LFI processing are disclosed, for example, in U.S. Published Patent Application 2004/0135280. The layered contents of the mold may be cured. The composites of the present invention may be fabricated using an open or closed mold.

The composite articles produced in accordance with the present, invention are generally produced in a mold. Suitable molds may be made of steel, aluminum, or nickel. In certain embodiments, molds having shear edges may be employed and exhibit certain advantages because of their improved seal and simplification of the product trimming process.

In producing composites in accordance with certain embodiments of the present disclosure, the barrier coat-forming reaction mixture may be sprayed to a mold surface at a rate of from about 40 to about 70 grams of reaction mixture per second. To be able to apply the reaction mixture at this rate and to achieve the desired barrier coat thickness of at least 5 mils, it will generally be necessary to heat both the isocyanate component and the isocyanate-reactive component (also referred to in this discussion as the "polyol component") to a temperature of from about 49 to about 71°C (about 120 to about 160°F). Typical spraying pressures for proper mixing and application will generally range from about 13,8 MPa to about 17,2 MPa (about 2,000 to about 2,500 psi). The specific conditions to be used will, however, be dependent upon the particular equipment spray equipment being used. Suitable spray equipment is commercially available from GRACO, Glas-Craft, GUSMER-DECKER, Isotherm and BINKS.

The temperature of the mold surface onto which the barrier coat-forming mixture may be sprayed is not critical for proper application and cure of the barrier coat. The mold temperature is important for the proper curing of the reinforcing layer which is applied to the barrier coat.

A mold release will generally be used to assure acceptable demolding of the composite article.

While the fiber-containing reaction mixture which will form the reinforcing layer of the composites of the present disclosure may be applied to the barrier coat by a variety of methods, long fiber injection ("LFI") is a particularly advantageous method.

In the LFI process, an open mold is charged from a mixhead in which fiberglass strands cut from the roving and the polyurethane reaction mixture are combined. The volume and length of the glass fibers can be adjusted at the mixhead. This process uses lower cost fiberglass roving rather than mats or preforms. The glass roving may be fed to a mixhead equipped with a glass chopper. The mixhead simultaneously dispenses the polyurethane reaction mixture and chops the glass roving as the mixhead is positioned over the mold and the contents of the mixhead are dispensed into the open mold. When the contents of the mixhead have been dispensed into the mold, the mold is closed, the reaction mixture is allowed to cure and the composite article is removed from the mold. The mold is generally maintained at a temperature of from about 49 to 88°C (120 to 190°F). The time needed to dispense the contents of the mixhead into the mold will usually be between 10 and 60 seconds. The mold will generally remain closed for a period of from about 1.5 to about 6 minutes to allow the glass fiber reinforced layer to cure.

One or more advantages realized by practicing the process of the present disclosure, particularly when conducted using a fully automated system, include: the ability to use lower cost fiberglass rovings instead of mats; the ability to vary the amount of glass reinforcement in a part; the ability to use either foamed or solid polyurethane as the reinforcing layer; and/or the ability to produce composite articles with a polyurethane in-mold coating and thereby eliminate secondary painting operations.

Having thus described our invention, the following Examples are given as being illustrative thereof.

### EXAMPLE 1

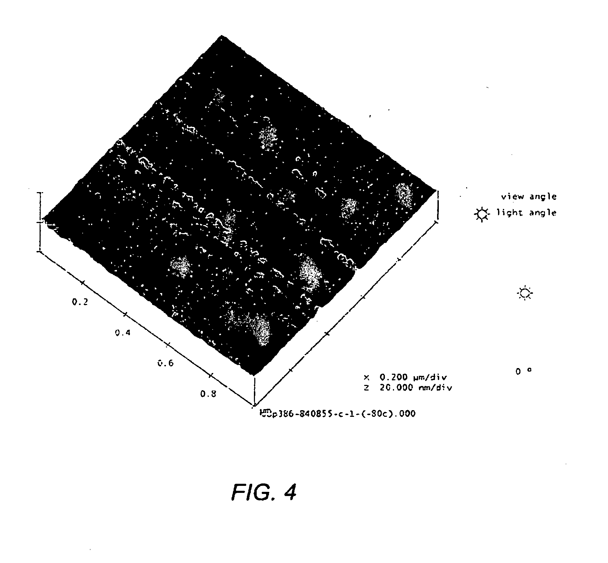

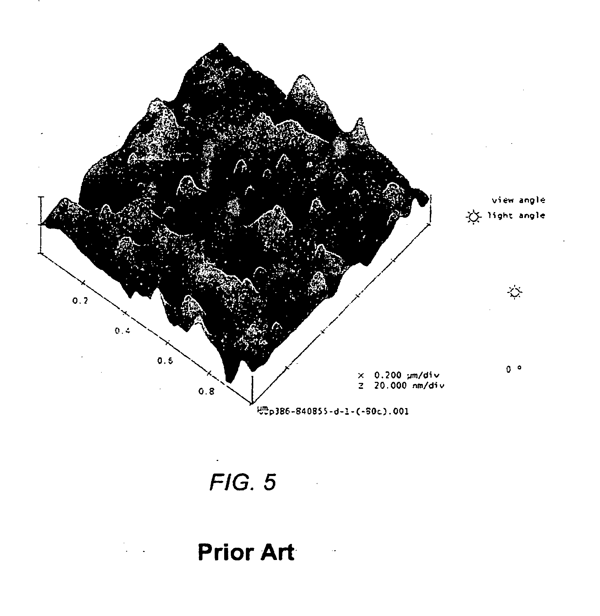

A polyurethane barrier coating was prepared as generally described above where the T_{g} of the hard segments was greater than 160°C. A comparative polyurethane barrier coating was also prepared where the T_{g} of the hard segments of the polyurethane was less than 100°C. An atomic force micrograph of the surface of the inventive sample is presented in FIG. 4 and an atomic force micrograph (AFM) of the comparative sample is provided in FIG. 5. As illustrated, the surface roughness of the comparative sample is rougher than that of the inventive barrier layer having a Tg > 160°C. A measure of surface roughness was performed using the AFM. The AFM calculates Root Means Square values, which are quantitative measures of surface roughness, and are based upon the average height of the samples and the surface x and y coordinates. The RMS value for the inventive sample was 0.47 and the RMS for the comparative sample was 4.52. The differences in sample smoothness, or roughness, are attributed to the hard and soft segment morphology in the polyurethane barrier coat.

### EXAMPLE 2

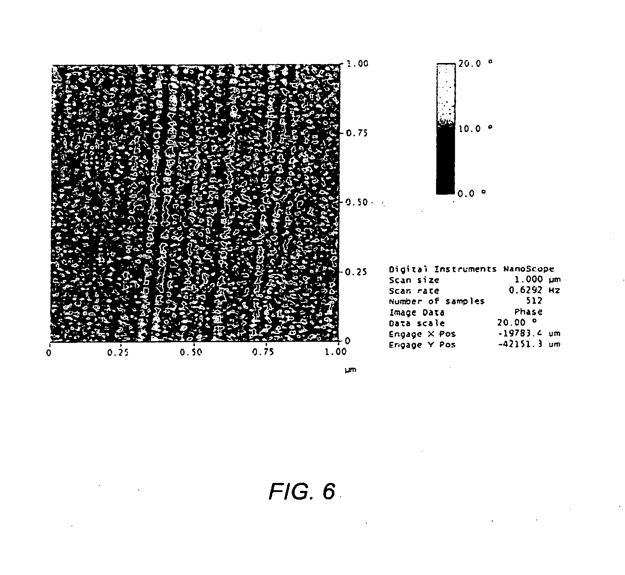

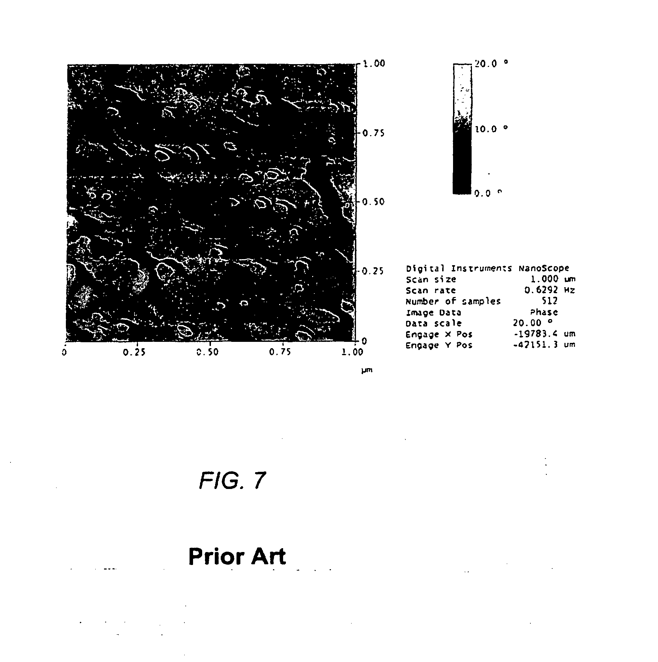

The morphologies of the hard and soft segments of the polyurethane barrier coats of Example 1 were further studied with AFM. FIG. 6 depicts the morphology of the inventive barrier coat that has hard segments with a T_{g} > 160°C, whereas FIG. 7 depicts the comparative barrier coat having hard segments with T_{g} < 100°C. FIG. 6 shows that the hard segments are more uniformly distributed in the inventive barrier layer shown in FIG. 6 than they are in the comparative barrier layer of FIG. 7. The hard segment domain sizes for the inventive sample range between 8.7 and 16 nm, whereas the hard segment domain sizes for the comparative barrier layer range from between 16.7 and 48.6 nm.

### EXAMPLE 3

An inventive polyurethane barrier coating was prepared as generally described above where the T_{g} of the hard segments was 152°C. The inventive polyurethane barrier coating was extended with isophorone diamine (IPDA). A comparative barrier layer was prepared that with a diethyltoluenediamine (DETDA) chain extender. The comparative barrier coating did not give hard segment T_{g} or Tₘ. Polymeric composite samples were made form layers of in-old paint, the barrier coats, and a glass fiber reinforced polyurethane layer. The polymeric composite with the barrier layer extended with IPDA had a surface with low orange peel and a powder coating visual smoothness standards rating of 9. The rating system is supplied by The Powder Coatings Institute, The Woodlands, TX. A value of 10 is considered being the most smooth, whereas a value of 1 is least smooth. The polymeric composite with the barrier layer extended with DETDA had smoothness values of 5 or below.

It will be appreciated by those skilled in the art that changes could be made to the embodiments described above without departing from the broad inventive concept thereof. It is understood, therefore, that this invention is not limited to the particular embodiments disclosed, but it is intended to cover modifications that are within the scope of the invention, as defined by the appended claims.

## Claims

1. A reinforced polymer composite (10, 20) comprising:
a polyurethane barrier layer (14) comprising:
a barrier layer first surface (16);
a barrier layer second surface (12); and
a plurality of hard segment domains;
a reinforced polyurethane layer (18) covering at least a portion of the barrier layer first surface (16);
wherein the barrier layer second surface (12) exhibits a Class A quality; and
wherein the plurality of hard segment domains substantially suppress deformation of the polymeric barrier layer (14) at a molding temperature of the reinforced polymer composite ;
**characterized in that** the barrier layer (14) has a crosslink density of 1.75 to 3.25 moles of branch points/kg.

2. The composite (10, 20) of claim 1, wherein the polymeric barrier layer (14) comprises a thermosetting polyurethane.

3. The composite (10, 20) of claim 1, wherein the polymeric barrier layer (14) comprises an aliphatic urethane.

4. The composite (10, 20) of claim 1, wherein the plurality of hard segments has a glass transition temperature of at least 100°C.

5. The composite (10, 20) of claim 1, wherein the plurality of hard segments has a domain size ranging from 5 nm to 20 nm.

6. The composite (10, 20) of claim 1, wherein the barrier layer (14) has a root mean square roughness of 1 or less.

7. The composite (10, 20) of claim 1, wherein the reinforced polymeric layer (18) comprises a plurality of fibers.

8. The composite (10, 20) of claim 7, wherein the plurality of fibers (24) comprises one or more of a glass fiber, a carbon fiber, or an aramid fiber.

9. The composite (10, 20) of claim 7, wherein the plurality of fibers (24) comprises glass fibers.

10. The composite (10, 20) of claim 1, further comprising a paint layer (22) covering at least a portion of the barrier layer second surface (12), wherein the paint layer (22) exhibits a Class A quality.

11. The composite (10, 20) of claim 1, further comprising a paint layer (22) covering at least a portion of the barrier layer second surface (12), wherein the paint layer exhibits a Class A quality.

12. The composite (10, 20) of claim 11, wherein the paint layer (22) comprises an in-mold paint layer.

13. The composite (10, 20) of claim 11, wherein the paint layer (22) comprises an aliphatic polyurethane.

14. The composite (10, 20) of claim 11, wherein the composite comprises an article of manufacture selected from the group consisting of a vehicular panel, a water craft hull, a window, and a door.

15. A method of preparing a reinforced polymer composite (10, 20) to a mold surface, the mold surface having a degree of finish suitable for the manufacture of a Class A quality cured polymer surface, comprising:
applying a polyurethane barrier layer (14) to at least a portion of the mold surface;
wherein the polymeric barrier layer (14) comprises:
a barrier layer first surface (16);
a barrier layer second surface (12); and
a plurality of hard segments;
applying a reinforced polyurethane layer (18) to cover at least a portion of the barrier layer first surface (16);
molding the polymeric barrier layer (14) and the reinforced barrier layer (18) at a polymer composite molding temperature;
wherein the plurality of hard segments substantially suppress deformation of the polymeric barrier layer (14) at the polymeric composite molding temperature; and
demolding the polymeric barrier layer (14) and the reinforced barrier layer (18);
wherein the barrier layer second surface (12) comprises the Class A quality cured polymer surface
**characterized in that** the barrier layer (14) has a crosslink density of 1.75 to 3.25 moles of branch points/kg.

16. The method of claim 15, wherein the applying the polymeric barrier layer (14) comprises applying a thermosetting polyurethane.

17. The method of claim 15, wherein the applying the polymeric barrier layer (14) comprises applying an aliphatic urethane.

18. The method of claim 15, wherein applying the polymeric barrier layer (14) comprises applying a barrier layer (14) wherein the plurality of hard segments has a glass transition temperature of at least 100°C.

19. The method of claim 15, wherein after the demolding the plurality of hard segments has a domain size from 5 nm to 20 nm.

20. The method of claim 15, wherein after the demolding the barrier layer (14) has a root mean square roughness of 1 or less.

21. The method of claim 15, wherein the reinforced polymeric layer (18) comprises a plurality of fibers (24).

22. The method of claim 21, wherein the plurality of fibers (24) comprises one or more of a glass fiber, a carbon fiber, or an aramid fiber.

23. The method of claim 21, wherein the plurality of fibers (24) comprises glass fibers.

24. The method of claim 15, further comprising applying an in-mold paint layer (22) to at least a portion of the mold prior to applying a polymeric barrier layer (14), wherein the applying the barrier layer (14) comprises covering the in-mold paint layer (22), and wherein the in-mold paint layer (22) exhibits the Class A quality after the demolding.

25. The method of claim 15, further comprising applying an in-mold paint layer (22) to at least a portion of the mold prior to applying a polymeric barrier layer (14), wherein the applying the barrier layer (14) comprises covering the in-mold paint layer (22), and wherein the in-mold paint layer (22) exhibits the Class A quality after demolding.

26. The method of claim 25, wherein the applying the in-mold paint layer (22) comprises applying an aliphatic polyurethane.

27. The method of claim 15, wherein the reinforced polymer composite is selected from the group consisting of a vehicular panel, a water craft hull, a window, and a door.

28. The use of the reinforced polymer composite (10, 20) according to claim 1 for the manufacture of an article comprising:
a polyurethane barrier layer (14) comprising:
a barrier layer first surface (16);
wherein the barrier layer (14) has a crosslink density of 1.75 to 3.25 moles of branch points/kg;
a barrier layer second surface (12); and
a plurality of hard segments;
wherein the plurality of hard segments has a glass transition temperature of at least 100°C; and
wherein the plurality of hard segments substantially suppress deformation of the polymeric barrier layer (14) at a polymer composite molding temperature;
a reinforced polyurethane layer (18) covering at least a portion of the
barrier layer first surface (16);
wherein the reinforced polyurethane layer (18) comprises a plurality of glass fibers;
wherein the barrier layer second surface (12) exhibits a Class A quality.

29. The use according to claim 28, wherein the article further comprises an inmold paint layer (22) covering at least a portion of the barrier layer second surface (16), wherein the in-mold paint layer (22) exhibits the Class A quality.

30. The use according to claim 29, wherein the in-mold paint layer (22) comprises an aliphatic polyurethane.

31. The use according to claim 28, wherein the article is selected from the group consisting of a vehicular panel, a water craft hull, a window, and a door.

## Patentansprüche

1. Verstärkter Polymerverbundstoff (10, 20), umfassend:
eine Polyurethansperrschicht (14), umfassend:
eine erste Sperrschichtoberfläche (16);
eine zweite Sperrschichtoberfläche (12); und
mehrere Hartsegmentdomänen;
eine verstärkte Polyurethanschicht (18), die mindestens einen Abschnitt der ersten Sperrschichtoberfläche (16) abdeckt;
wobei die zweite Sperrschichtoberfläche (16) eine Qualität der Klasse A zeigt; und
wobei die mehreren Hartsegmentdomänen die Verformung der Polymersperrschicht (14) bei einer Formtemperatur des verstärkten Polymerverbundstoffs im Wesentlichen unterdrücken;
**dadurch gekennzeichnet, dass** die Sperrschicht (14) bezogen auf die Verzweigungsstellen/kg eine Vernetzungsdichte von 1,75 bis 3,25 Mol aufweist.

2. Verbundstoff (10, 20) nach Anspruch 1, wobei die Polymersperrschicht (14) ein wärmehärtendes Polyurethan umfasst.

3. Verbundstoff (10, 20) nach Anspruch 1, wobei die Polymersperrschicht (14) ein aliphatisches Urethan umfasst.

4. Verbundstoff (10, 20) nach Anspruch 1, wobei die mehreren Hartsegmente eine Glasumwandlungstemperatur von mindestens 100 °C aufweisen.

5. Verbundstoff (10, 20) nach Anspruch 1, wobei die mehreren Hartsegmente eine Domänengröße im Bereich von 5 nm bis 20 nm aufweisen.

6. Verbundstoff (10, 20) nach Anspruch 1, wobei die Sperrschicht (14) einen quadratischen Mittenrauwert von 1 oder weniger aufweist.

7. Verbundstoff (10, 20) nach Anspruch 1, wobei die verstärkte Polymerschicht (18) mehrere Fasern umfasst.

8. Verbundstoff (10, 20) nach Anspruch 7, wobei die mehreren Fasern (24) eine oder mehrere einer Glasfaser, einer Kohlenstofffaser oder einer Aramidfaser umfassen.

9. Verbundstoff (10, 20) nach Anspruch 7, wobei die mehreren Fasern (24) Glasfasern umfassen.

10. Verbundstoff (10, 20) nach Anspruch 1, ferner umfassend eine Lackschicht (22), die mindestens einen Abschnitt der zweiten Sperrschichtoberfläche (12) abdeckt, wobei die Lackschicht (22) die Güteklasse A aufweist.

11. Verbundstoff (10, 20) nach Anspruch 1, ferner umfassend eine Lackschicht (22), die mindestens einen Abschnitt der zweiten Sperrschichtoberfläche (12) abdeckt, wobei die Lackschicht die Güteklasse A aufweist.

12. Verbundstoff (10, 20) nach Anspruch 11, wobei die Lackschicht (22) eine In-Mold-Lackschicht umfasst.

13. Verbundstoffs (10, 20) nach Anspruch 11, wobei die Lackschicht (22) ein aliphatisches Polyurethan umfasst.

14. Verbundstoff (10, 20) nach Anspruch 11, wobei der Verbundstoff einen Fertigungsartikel umfasst, der ausgewählt ist aus der Gruppe bestehend aus einem Fahrzeugkarosserieteil, einem Wasserfahrzeugrumpf, einem Fenster und einer Tür.

15. Verfahren zur Herstellung eines verstärkten Polymerverbundstoffs (10, 20) auf einer Formoberfläche, wobei die Formoberfläche einen Endbearbeitungsgrad aufweist, der für die Fertigung einer gehärteten Polymeroberfläche der Güteklasse A geeignet ist, umfassend:
Aufbringen einer Polyurethansperrschicht (14) auf mindestens einen Abschnitt der Formoberfläche;
wobei die Polymersperrschicht (14) Folgendes umfasst:
eine erste Sperrschichtoberfläche (16);
eine zweite Sperrschichtoberfläche (12); und
mehrere Hartsegmente;
Aufbringen einer verstärkten Polyurethanschicht (18), um mindestens einen Abschnitt der ersten Sperrschichtoberfläche (16) abzudecken;
Formen der Polymersperrschicht (14) und der verstärkten Sperrschicht (18) bei einer Polymerverbundstoff-Formtemperatur;
wobei die mehreren Hartsegmente eine Verformung der Polymersperrschicht (14) bei der Polymerverbundstoff-Formtemperatur im Wesentlichen unterdrücken; und
Entformen der Polymersperrschicht (14) und der verstärkten Sperrschicht (18);
wobei die zweite Sperrschichtoberfläche (12) die gehärtete Polymeroberfläche der Güteklasse A umfasst, **dadurch gekennzeichnet, dass** die Sperrschicht (14) bezogen auf die Verzweigungsstellen/kg eine Vernetzungsdichte von 1,75 bis 3,25 Mol aufweist.

16. Verfahren nach Anspruch 15, wobei das Aufbringen der Polymersperrschicht (14) das Aufbringen eines wärmehärtenden Polyurethans umfasst.

17. Verfahren nach Anspruch 15, wobei das Aufbringen der Polymersperrschicht (14) das Aufbringen eines aliphatischen Urethans umfasst.

18. Verfahren nach Anspruch 15, wobei das Aufbringen der Polymersperrschicht (14) das Aufbringen einer Sperrschicht (14) umfasst, wobei die mehreren Hartsegmente eine Glasumwandlungstemperatur von mindestens 100 °C aufweisen.

19. Verfahren nach Anspruch 15, wobei die mehreren Hartsegmente nach dem Entformen eine Domänengröße von 5 nm bis 20 nm aufweisen.

20. Verfahren nach Anspruch 15, wobei die Sperrschicht (14) nach dem Entformen einen quadratischen Mittenrauwert von 1 oder weniger aufweist.

21. Verfahren nach Anspruch 15, wobei die verstärkte Polymerschicht (18) mehrere Fasern (24) umfasst.

22. Verfahren nach Anspruch 21, wobei die mehreren Fasern (24) eine oder mehrere einer Glasfaser, einer Kohlenstofffaser oder einer Aramidfaser umfassen.

23. Verfahren nach Anspruch 21, wobei die mehreren Fasern (24) Glasfasern umfassen.

24. Verfahren nach Anspruch 15, ferner umfassend das Aufbringen einer In-Mold-Lackschicht (22) auf mindestens einen Abschnitt der Form vor dem Aufbringen einer Polymersperrschicht (14), wobei das Aufbringen der Sperrschicht (14) das Abdecken der In-Mold-Lackschicht (22) umfasst und wobei die In-Mold-Lackschicht (22) die Güteklasse A nach dem Entformen aufweist.

25. Verfahren nach Anspruch 15, ferner umfassend das Aufbringen einer In-Mold-Lackschicht (22) auf mindestens einen Abschnitt der Form vor dem Aufbringen einer Polymersperrschicht (14), wobei das Aufbringen der Sperrschicht (14) das Abdecken der In-Mold-Lackschicht (22) umfasst und wobei die In-Mold-Lackschicht (22) die Güteklasse A nach dem Entformen aufweist.

26. Verfahren nach Anspruch 25, wobei das Aufbringen der In-Mold-Lackschicht (22) das Aufbringen eines aliphatischen Polyurethans umfasst.

27. Verfahren nach Anspruch 15, wobei der verstärkte Polymerverbundstoff ausgewählt ist aus der Gruppe bestehend aus einem Fahrzeugkarosserieteil, einem Wasserfahrzeugrumpf, einem Fenster und einer Tür.

28. Verwendung des verstärkten Polymerverbundstoffs (10, 20) nach Anspruch 1 für die Fertigung eines Artikels, der Folgendes umfasst:
eine Polyurethansperrschicht (14), umfassend:
eine erste Sperrschichtoberfläche (16);
wobei die Sperrschicht (14) bezogen auf die Verzweigungsstellen/kg eine Vernetzungsdichte von 1,75 bis 3,25 Mol aufweist;
eine zweite Sperrschichtoberfläche (12); und
mehrere Hartsegmente;
wobei die mehreren Hartsegmente eine Glasumwandlungstemperatur von mindestens 100 °C aufweisen; und
wobei die mehreren Hartsegmente die Verformung der Polymersperrschicht (14) bei einer Polymerverbundstoff-Formtemperatur im Wesentlichen unterdrücken;
eine verstärkte Polyurethanschicht (18), die mindestens einen Abschnitt der ersten Sperrschichtoberfläche (16) abdeckt;
wobei die verstärkte Polyurethanschicht (18) mehrere Glasfasern umfasst;
wobei die zweite Sperrschichtoberfläche (12) eine Güteklasse A aufweist.

29. Verwendung nach Anspruch 28, wobei der Artikel ferner eine In-Mold-Lackschicht (22) umfasst, die mindestens einen Abschnitt der zweiten Sperrschichtoberfläche (12) abdeckt, wobei die In-Mold-Lackschicht (22) die Güteklasse A aufweist.

30. Verwendung nach Anspruch 29, wobei die In-Mold-Lackschicht (22) ein aliphatisches Polyurethan umfasst.

31. Verwendung nach Anspruch 28, wobei der Artikel ausgewählt ist aus der Gruppe bestehend aus einem Fahrzeugkarosserieteil, einem Wasserfahrzeugrumpf, einem Fenster und einer Tür.

## Revendications

1. Composite polymère renforcé (10, 20) comprenant :
une couche barrière en polyuréthane (14) comprenant :
une première surface de couche barrière (16) ;
une deuxième surface de couche barrière (12) ; et
une pluralité de domaines à segments durs ;
une couche de polyuréthane renforcée (18) recouvrant au moins une partie de la première surface de couche barrière (16) ;
la deuxième surface de couche barrière (12) présentant une qualité de classe A ; et
la pluralité de domaines à segments durs supprimant sensiblement la déformation de la couche barrière polymère (14) à une température de moulage du composite polymère renforcé ;
**caractérisé en ce que** la couche barrière (14) a une densité de liaisons transversales de 1,75 à 3,25 moles de points de ramification/kg.

2. Composite (10, 20) selon la revendication 1, dans lequel la couche barrière polymère (14) comprend un polyuréthane thermodurcissable.

3. Composite (10, 20) selon la revendication 1, dans lequel la couche barrière polymère (14) comprend un uréthane aliphatique.

4. Composite (10, 20) selon la revendication 1, dans lequel la pluralité de segments durs a une température de transition vitreuse d'au moins 100 °C.

5. Composite (10, 20) selon la revendication 1, dans lequel la pluralité de segments durs a une taille de domaine allant de 5 nm à 20 nm.

6. Composite (10, 20) selon la revendication 1, dans lequel la couche barrière (14) a une rugosité moyenne quadratique de 1 ou moins.

7. Composite (10, 20) selon la revendication 1, dans lequel la couche polymère renforcée (18) comprend une pluralité de fibres.

8. Composite (10, 20) selon la revendication 7, dans lequel la pluralité de fibres (24) comprend une fibre de verre, et/ou une fibre de carbone, et/ou une fibre d'aramide.

9. Composite (10, 20) selon la revendication 7, dans lequel la pluralité de fibres (24) comprend des fibres de verre.

10. Composite (10, 20) selon la revendication 1, comprenant en outre une couche de peinture (22) recouvrant au moins une partie de la deuxième surface de couche barrière (12), la couche de peinture (22) présentant une qualité de classe A.

11. Composite (10, 20) selon la revendication 1, comprenant en outre une couche de peinture (22) recouvrant au moins une partie de la deuxième surface de couche barrière (12), la couche de peinture présentant une qualité de classe A.

12. Composite (10, 20) selon la revendication 11, dans lequel la couche de peinture (22) comprend une couche de peinture dans le moule.

13. Composite (10, 20) selon la revendication 11, dans lequel la couche de peinture (22) comprend un polyuréthane aliphatique.

14. Composite (10, 20) selon la revendication 11, le composite comprenant un article manufacturé choisi dans le groupe constitué par un panneau de véhicule, une coque d'embarcation, une fenêtre, et une porte.

15. Procédé de préparation d'un composite polymère renforcé (10, 20) à une surface de moule, la surface de moule ayant un degré de finition approprié pour la fabrication d'une surface polymère durcie de qualité de classe A, comprenant .
l'application d'une couche barrière en polyuréthane (14) à au moins une partie de la surface de moule ;
la couche barrière polymère (14) comprenant .
une première surface de couche barrière (16) ;
une deuxième surface de couche barrière (12) ; et
une pluralité de segments durs ;
l'application d'une couche de polyuréthane renforcée (18) pour recouvrir au moins une partie de la première surface de couche barrière (16) ;
le moulage de la couche barrière polymère (14) et de la couche barrière renforcée (18) à une température de moulage de composite polymère ;
la pluralité de segments durs supprimant sensiblement la déformation de la couche barrière polymère (14) à la température de moulage de composite polymère ; et
le démoulage de la couche barrière polymère (14) et de la couche barrière renforcée (18) ;
la deuxième surface de couche barrière (12) comprenant la surface polymère durcie de qualité de classe A,
**caractérisé en ce que** la couche barrière (14) a une densité de liaisons transversales de 1,75 à 3,25 moles de points de ramification/kg.

16. Procédé selon la revendication 15, dans lequel l'application de la couche barrière polymère (14) comprend l'application d'un polyuréthane thermodurcissable.

17. Procédé selon la revendication 15, dans lequel l'application de la couche barrière polymère (14) comprend l'application d'un uréthane aliphatique.

18. Procédé selon la revendication 15, dans lequel l'application de la couche barrière polymère (14) comprend l'application d'une couche barrière (14) dans laquelle la pluralité de segments durs a une température de transition vitreuse d'au moins 100 °C.

19. Procédé selon la revendication 15, dans lequel après le démoulage la pluralité de segments durs a une taille de domaine de 5 nm à 20 nm.

20. Procédé selon la revendication 15, dans lequel après le démoulage la couche barrière (14) a une rugosité moyenne quadratique de 1 ou moins.

21. Procédé selon la revendication 15, dans lequel la couche polymère renforcée (18) comprend une pluralité de fibres (24).

22. Procédé selon la revendication 21, dans lequel la pluralité de fibres (24) comprend une fibre de verre, et/ou une fibre de carbone, et/ou une fibre d'aramide.

23. Procédé selon la revendication 21, dans lequel la pluralité de fibres (24) comprend des fibres de verre.

24. Procédé selon la revendication 15, comprenant en outre l'application d'une couche de peinture dans le moule (22) à au moins une partie du moule avant l'application d'une couche barrière polymère (14), l'application de la couche barrière (14) comprenant le revêtement de la couche de peinture dans le moule (22), et la couche de peinture dans le moule (22) présentant la qualité de classe A après le démoulage.

25. Procédé selon la revendication 15, comprenant en outre l'application d'une couche de peinture dans le moule (22) à au moins une partie du moule avant l'application d'une couche barrière polymère (14), l'application de la couche barrière (14) comprenant le revêtement de la couche de peinture dans le moule (22), et la couche de peinture dans le moule (22) présentant la qualité de classe A après démoulage.

26. Procédé selon la revendication 25, dans lequel l'application de la couche de peinture dans le moule (22) comprend l'application d'un polyuréthane aliphatique.

27. Procédé selon la revendication 15, dans lequel le composite polymère renforcé est choisi dans le groupe constitué par un panneau de véhicule, une coque d'embarcation, une fenêtre, et une porte.

28. Utilisation du composé polymère renforcé (10, 20) selon la revendication 1 pour la fabrication d'un article comprenant .
une couche barrière en polyuréthane (14) comprenant .
une première surface de couche barrière (16) ;
la couche barrière (14) ayant une densité de liaisons transversales de 1,75 à 3,25 moles de points de ramification/kg ;
une deuxième surface de couche barrière (12) ; et
une pluralité de segments durs ;
la pluralité de segments durs ayant une température de transition vitreuse d'au moins 100 °C ; et
la pluralité de segments durs supprimant sensiblement la déformation de la couche barrière polymère (14) à une température de moulage de composite polymère ;
une couche de polyuréthane renforcée (18) recouvrant au moins une partie de la première surface de couche barrière (16) ;
la couche de polyuréthane renforcée (18) comprenant une pluralité de fibres de verre ;
la deuxième surface de couche barrière (12) présentant une qualité de classe A.

29. Utilisation selon la revendication 28, dans laquelle l'article comprend en outre une couche de peinture dans le moule (22) recouvrant au moins une partie de la deuxième surface de couche barrière (12), la couche de peinture dans le moule (22) présentant la qualité de classe A.

30. Utilisation selon la revendication 29, dans laquelle la couche de peinture dans le moule (22) comprend un polyuréthane aliphatique.

31. Utilisation selon la revendication 28, dans laquelle l'article est choisi dans le groupe constitué par un panneau de véhicule, une coque d'embarcation, une fenêtre, et une porte.
